# EUROPÄISCHE PATENTANMELDUNG

(11) **EP 3 181 218 A1**
(43) Veröffentlichungstag der Anmeldung: **21.06.2017**
(21) Anmeldenummer: 15003601.0
(22) Anmeldetag: 15.12.2015
(51) Int. Cl.: B01J 4/00

(54) **PRODUKTGASSAMMELLEITUNGSSYSTEM FÜR EINEN DAMPFREFORMER**

(71) Anmelder: L'Air Liquide Société Anonyme pour l'Etude et l'Exploitation des Procédés Georges Claude, 75007 Paris (FR)
(72) Erfinder: COSCIA, Antonio, D-65589 Hadamar (DE); KAISER, Tobias, D-64385 Reichelsheim (DE)
(74) Vertreter: Dropsch, Holger

(57) **Zusammenfassung**

Produktgassammelleitungssystem für einen Dampfreformer, enthaltend eine Vielzahl vor Reaktionsrohren innerhalb eines Reformergehäuses, zur Erzeugung von Synthesegas, umfassend:
a) eine außerhalb des Reformergehäuses des Dampfreformers angeordnete Produktgassammelleitung,
b) mehrere, über die Länge der Leitung angeordnete Stutzenrohre zum Anschluss jeweils eines Reaktionsrohres an die Produktgassammelleitung,
c) mindestens ein Windschild, zum Schutz der Produktgassammelleitung vor Wind und Zugluft.

## Beschreibung

### Gebiet der Erfindung

Die Erfindung betrifft ein Produktgassammelleitungssystem für einen Dampfreformer, enthaltend eine Vielzahl vor Reaktionsrohren innerhalb eines Reformergehäuses, zur Erzeugung von Synthesegas. Die Erfindung umfasst weiterhin einen Dampfreformer, der mit dem erfindungsgemäßen Produktgassammelleitungssystem ausgestattet ist.

### Stand der Technik

Dampfreformer und deren Produktgassammelleitungssysteme sind bekannt und in ihren Grundzügen z. B. in Ullmann's Encyclopedia of Industrial Chemistry, 6th Ed., Vol. 15, S. 332, Kap. 2.2.3. beschrieben.

Die Produktgassammelleitungen haben die Aufgabe, das um die 900 °C heiße und unter hohem Druck von beispielsweise 30 bar stehende, aus den Reaktionsrohren kommende Synthesegas aufzunehmen und zur weiteren Behandlung, insbesondere zur Abkühlung unter möglichst weitgehender Zurückgewinnung der im Gas enthaltenen Wärme, abzuleiten. Da die Sammelleitungen im Freien verlegt werden, sind sie aus einem Mantel-und einem konzentrischen Innenrohr mit dazwischen liegender Isolierung aufgebaut, um nicht unnötig viel Wärme an die Umgebungsluft abzugeben. Im Reformerbetrieb soll die Temperatur des Mantelrohrs einerseits hoch genug sein, um die Bildung von korrosiven Kondensaten in der Isolierschicht und insbesondere an der Innenwand des Mantelrohrs sicher auszuschließen, und andererseits soll die Temperatur nicht so hoch sein, dass der Stahl des Mantelrohrs geschwächt wird. Darum wird die zwischen Innen- und Mantelrohr liegende Isolierung so ausgeführt, dass im Betrieb die Manteltemperatur ungefähr im Bereich von 150 bis 200°C liegt und auf eine Außenisolierung der Sammelleitungen wird ganz verzichtet.

Ein besonderes Problem besteht darin, auf dem gesamten Umfang des Mantelrohrs eine möglichst gleichmäßige Temperatur einzustellen, um unterschiedliche Wärmedehnungen im Mantel und damit ein Verbiegen der Sammelleitung über ihre Länge zu vermeiden. Allerdings ist dieses Ziel schwer zu erreichen, da die Oberseite der Sammelleitungen der vom Reformerboden ausgehenden Strahlungswärme ausgesetzt ist und außerdem einen Wärmezufluss über die mit den heißen Reformerrohren verbundenen Stutzen der Sammelleitung erhält.

Die Zeichnung der europäischen Anmeldeschrift EP 0 799 639 A1 zeigt eine häufig verwendete Ausführungsform eines solchen Stutzens. Aus dieser Zeichnung kann der Fachmann nachvollziehen, wie Wärme von dem heißen, gasführenden inneren Stutzenrohr auf das Mantelrohr des Stutzens und weiter auf das Mantelrohr der Sammelleitung übertragen wird.

Im Gegensatz dazu sind die Unterseiten der Sammelleitungen lediglich dem Wind und der Zugluft ausgesetzt. Insgesamt führt dies dazu, dass die Temperatur der Oberseite höher als die der Unterseite ist, was zu einer stärkeren Wärmedehnung der Oberseite und damit zu einer Biegung der Sammelleitung führt.

Eine denkbare Gegenmaßnahme könnte darin bestehen, die innenliegende Isolierung der Sammelleitung mit über den Umfang variierenden Wärmedurchgangskoeffizienten auszuführen, wie es in der deutschen Patentschrift DE 10 2006 022 898 B3 vorgeschlagen wird. Auf diese Weise könnte die vom heißen, im Innenrohr fließenden Gas durch die innenliegende Isolierung auf das Mantelrohr übertragene Wärmemenge über den Rohrumfang variiert so eingestellt werden, dass die oben beschriebenen äußeren Einflüsse kompensiert werden. Allerdings ist technische Realisierung einer solchen Isolierung aufwendig.

Aufgabe der Erfindung ist es daher, eine weniger aufwendige Ausgestaltung eines Produktgassammelleitungssystems zur Verfügung zu stellen, bei der die Nachteile des Stands der Technik in zumindest verringertem Maße auftreten.

### Beschreibung der Erfindung

Die Aufgabe wird durch ein Produktgassammelleitungssystem und durch einen damit ausgestatteten Dampfreformer gemäß den unabhängigen Ansprüchen 1 und 14 gelöst.

### Erfindungsgemäßes Produktgassammelleitungssystem:

Produktgassammelleitungssystem für einen Dampfreformer, enthaltend eine Vielzahl vor Reaktionsrohren innerhalb eines Reformergehäuses, zur Erzeugung von Synthesegas, umfassend:
a) eine außerhalb des Reformergehäuses des Dampfreformers angeordnete und der Umgebungsluft ausgesetzte Produktgassammelleitung, enthaltend ein Mantelrohr und ein konzentrisch über die gesamte Länge verlaufendes Innenrohr, wobei der Raum zwischen Innenrohr und Mantelrohr mit Isoliermaterial ausgefüllt ist,
b) mehrere, mindestens einen ersten und einen letzten, über die Länge der Leitung angeordnete Stutzenrohre zum Anschluss jeweils eines Reaktionsrohres an die Produktgassammelleitung,
c) mindestens ein Windschild, wobei der Windschild so ausgestaltet und angeordnet ist, dass er die Produktgassammelleitung zumindest auf einem Teil ihrer Länge und ihres Umfangs vor Wind und Zugluft schützt.

Der mindestens eine Windschild kann so ausgestaltet und im Verhältnis zur Sammelleitung angeordnet werden, dass z. B. die Unterseite der Mantelleitung der Sammelleitung vor Wind und Zugluft weitgehend geschützt wird.

### Bevorzugte Ausgestaltungen der Erfindung

Eine bevorzugte Ausführungsform der Erfindung ist dadurch gekennzeichnet, das jedes Stutzenrohr ein Mantelrohr und ein konzentrisch über seine gesamte Länge verlaufendes Innenrohr umfasst, wobei der Raum zwischen Innen- und Mantelrohr mit Isoliermaterial ausgefüllt ist, und wobei das Stutzenrohr bis in den Boden des Reformergehäuses hineinreicht. Durch Einbringen einer Isolierschicht zwischen die zwei konzentrisch angeordneten Rohre wird die Wärmeleitung auf den Synthesegassammler und somit die Durchbiegung der Sammelleitung verringert.

Eine weitere bevorzugte Ausführungsform der Erfindung ist dadurch gekennzeichnet, dass die Stutzenrohre auf dem Umfang der Sammelleitung auf einer geraden, axialen Linie angeordnet sind. Diese Ausführung erlaubt eine Vergleichmäßigung der Behandlung des im Dampfreformer in verschiedenen Reformerrohren erzeugten Synthesegases.

Eine weitere bevorzugte Ausführungsform der Erfindung ist dadurch gekennzeichnet, dass das Innenrohr des Stutzens und/oder der Sammelleitung so ausgeführt sind, dass sie gasdurchlässig sind, sodass die jeweilige Mantelleitung dem Druck des Synthesegases ausgesetzt ist. Die Gasdurchlässigkeit des Innenrohrs, das vom Fachmann auch als Liner bezeichnet wird, ist eine Folge der im Rohr vorhandenen Dehnungsfugen, durch die temperaturbedingte Materialdehnungen kompensiert werden.

Eine weitere bevorzugte Ausführungsform der Erfindung ist dadurch gekennzeichnet, dass die Produktgassammelleitung waagrecht angeordnet ist. Hierdurch ist ein gleichmäßiger Abstand der Leitung zum ebenfalls waagrecht aufgestellten Reformer gegeben. Dadurch wird die Montage des Reformers und des Produktgassammelleitungssystems vereinfacht.

Eine weitere bevorzugte Ausführungsform der Erfindung ist dadurch gekennzeichnet, dass das innenliegende Rohr des Stutzenrohrs aus Metall gefertigt ist. Hierdurch wird, im Vergleich zu einem Rohr aus keramischem Material, die Montage des Rohrs erleichtert.

Eine weitere bevorzugte Ausführungsform der Erfindung ist dadurch gekennzeichnet, dass das Stutzenrohr mit einer außen liegenden Isolierung gegen Wärmeverlust ausgestattet ist. Das Mantelrohr des Stutzens wird, im Gegensatz zu dem der Sammelleitung, aus hochwarmfestem Stahl gefertigt. Darum kann hier der Vorteil einer Außenisolierung genutzt werden, ohne dass das Rohr, durch die erhöhte Temperatur, in unzulässigem Umfang an Festigkeit verliert.

Eine weitere bevorzugte Ausführungsform der Erfindung ist dadurch gekennzeichnet, dass der Windschild die Form einer Halbschale hat. Diese Form ermöglicht einen gleichmäßigen Abstand des Windschildes zur Rohrwand.

Eine weitere bevorzugte Ausführungsform der Erfindung ist dadurch gekennzeichnet, dass der Windschild zwischen dem ersten und dem letzten Stutzenrohr angeordnet ist. Durch diese Art der Anordnung wird der Bereich der Sammelleitung erfasst, in dem die Stutzen liegen, sodass eine gute Wirkung des Windschilds erzielt wird, insbesondere, wenn es mittig zwischen dem ersten und dem letzten Stutzenrohr angeordnet ist.

Eine weitere bevorzugte Ausführungsform der Erfindung ist dadurch gekennzeichnet, dass der Windschild so angeordnet ist, dass er die Sammelleitung auf der den Stutzenrohen gegenüber liegenden Seite schützt. Auf diese Weise wird der von den Stutzenrohren entfernteste und am wenigsten erwärmte Teil des Mantelrohrs vor Wind und Zugluft geschützt.

Eine weitere bevorzugte Ausführungsform der Erfindung ist dadurch gekennzeichnet, dass der Windschild mehrteilig ausgeführt ist. Hierdurch kann der Windschild baulichen Erfordernissen, wie z.B. Unterstützungen und Halterungen für die Sammelleitungen Rechnung getragen werden.

Die Erfindung betrifft auch einen Dampfreformer, ausgestattet mit mindestens einem Produktgassammelleitungssystem gemäß der Erfindung oder ihren bevorzugten Ausführungsformen.

### Ausführungsbeispiele

Weitere Merkmale, Vorteile und Anwendungsmöglichkeiten der Erfindung ergeben sich auch aus der nachfolgenden Beschreibung von Ausführungsbeispielen und den Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Anhand der Zeichnung soll die Erfindung im Folgenden erläutert werden. Es zeigen:

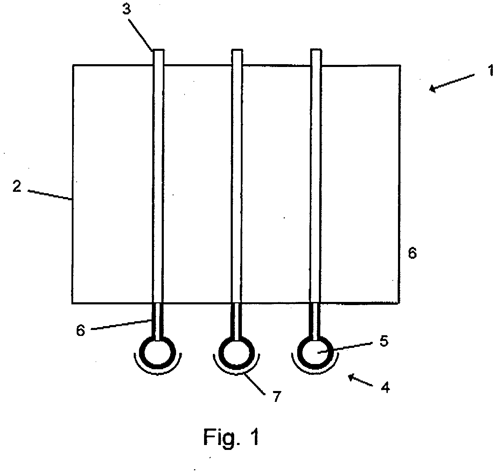

- Fig. 1:: Eine Schnittzeichnung durch einen Dampfreformer quer zu dessen Längsachse, ausgestattet mit drei erfindungsgemäßen Produktgas sammelleitungssystemen,

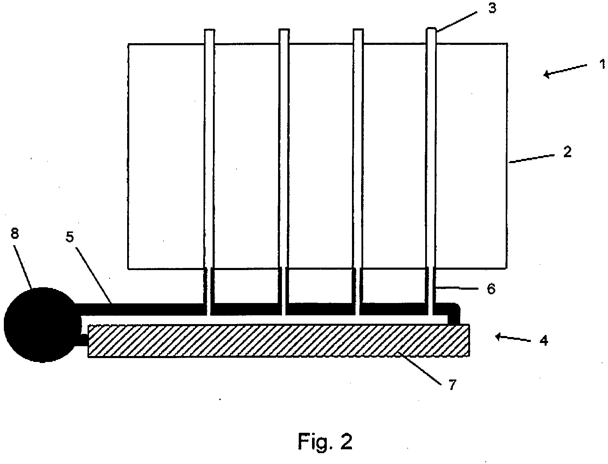

- Fig. 2:: Einen Längsschnitt durch einen Dampfreformer und durch ein erfin dungsgemäßes Produktgassammelleitungssystem des Reformers,

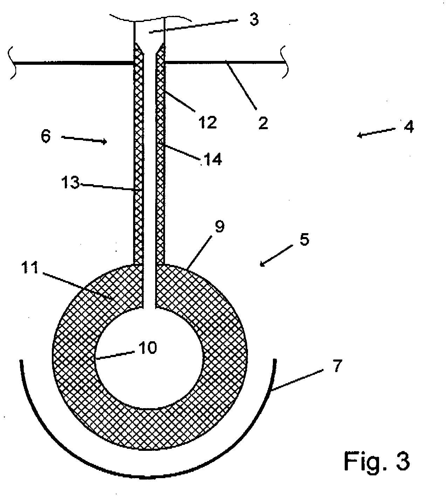

- Fig. 3:: Ein Querschnitt durch ein erfindungsgemäßes Produktgassammellei ungssystem.

Im Detail zeigen die Figuren der Zeichnung folgendes:

### Fig. 1:

Dieser Querschnitt eines Dampfreformers 1 geht durch das Reformergehäuse 2 und drei darin installierte Reformerrohre 3. Die zwischen den Reformerrohren in der Decke des Reformergehäuses angeordneten Brenner, sowie sämtliche für die Zu- und Ableitung der Prozess- und Abgase vorhandenen Rohrleitungssysteme, soweit sie nicht die Erfindung betreffen, sind in der Zeichnung nicht dargestellt. Weiterhin zeigt die Figur drei erfindungsgemäße Produktgassammelleitungssysteme 4, umfassend jeweils eine Produktgassammelleitung 5 mit ihren Stutzenrohren 6 und ihrem Windschild 7.

### Fig. 2:

Dieser Längsschnitt eines Dampfreformers 1 geht durch das Reformergehäuse 2 und eine der darin installierten Reformerrohrreihen, die aus den vier Reformerrohren 3 besteht. Weiterhin zeigt die Figur das der Reformerrohrreihe zugeordnete Produktgassammelleitungssystem 4 mit der im Längsschnitt gezeigten Produktgassammelleitung 5, deren Stutzenrohren 6 und dem, die untere Hälfte der Produktgassammelleitung 5 abdeckenden Windschild 7. Die Produktgassammelleitung mündet in eine weitere, quer verlaufende Sammelleitung 8, die aber nicht zur Erfindung gehört.

### Fig. 3:

Diese Figur zeigt einen Querschnitt durch ein erfindungsgemäßes Produktgassammelleitungssystem 4, mit der Produktgassammelleitung 5, deren Mantelrohr 9, deren Innenrohr 10, dem zwischen Innen- und Mantelrohr liegendem Isoliermaterial 11, einem Stutzenrohr 6, das bis in den Boden des Reformergehäuses 2 reicht und dort an ein Reaktorrohr 3 angeschlossen ist. Weiterhin wird das Mantelrohr 12, das Innenrohr 13 und das zwischen Innen- und Mantelrohr liegende Isoliermaterial 14 und der Windschild 7 dargestellt. Die Halterung des Windschilds ist nicht dargestellt. Er kann beispielsweise am Mantel der Produktgassammelleitung oder auch am Reformergehäuse befestigt sein. Die Gestaltung und die Anbringung des Windschilds kann den örtlichen Gegebenheiten bezüglich Platzverhältnissen und Windrichtung angepasst werden. In dieser Figur ist der Windschild mit einem halbkreisförmigen Querschnitt ausgebildet und er ist so platziert, dass er genau die Unterseite der Sammelleitung abdeckt. Es ist aber auch möglich, ihn so zu platzieren, dass er bevorzugt eine der Seitenfläche der Sammelleitung schützt.

### Gewerbliche Anwendbarkeit

Die Erfindung liefert eine wirtschaftliche und technisch unkomplizierte Lösung dafür, die Manteltemperatur einer Produktgassammelleitung zu vergleichmäßigen und durch Temperaturunterschied verursachte Spannungen im Mantelrohr zu verkleinern. Die Erfindung ist daher gewerblich anwendbar.

### Bezugszeichenliste

- 1: Dampfreformer
- 2: Reformergehäuse
- 3: Reformerrohre
- 4: Produktgassammelleitungssystem
- 5: Produktgassammelleitung
- 6: Stutzenrohr
- 7: Windschild
- 8: Sammelleitung
- 9: Mantelrohr
- 10: Innenrohr
- 11: Isoliermaterial
- 12: Mantelrohr
- 13: Innenrohr
- 14: Isoliermaterial

## Patentansprüche

**1.** Produktgassammelleitungssystem für einen Dampfreformer, enthaltend eine Vielzahl vor Reaktionsrohren innerhalb eines Reformergehäuses, zur Erzeugung von Synthesegas, umfassend:
a) eine außerhalb des Reformergehäuses des Dampfreformers angeordnete und der Umgebungsluft ausgesetzte Produktgassammelleitung, enthaltend ein Mantelrohr und ein konzentrisch über die gesamte Länge verlaufendes Innenrohr, wobei der Raum zwischen Innenrohr und Mantelrohr mit Isoliermaterial ausgefüllt ist,
b) mehrere, mindestens einen ersten und einen letzten, über die Länge der Leitung angeordnete Stutzenrohre zum Anschluss jeweils eines Reaktionsrohres an die Produktgassammelleitung,
c) mindestens ein Windschild, wobei der Windschild so ausgestaltet und angeordnet ist, dass er die Produktgassammelleitung zumindest auf einem Teil ihrer Länge und ihres Umfangs vor Wind und Zugluft schützt.

**2.** Produktgassammelleitungssystem gemäß Anspruch 1, **dadurch gekennzeichnet**, das jedes Stutzenrohr ein Mantelrohr und ein konzentrisch über seine gesamte Länge verlaufendes Innenrohr umfasst, wobei der Raum zwischen Innen- und Mantelrohr mit Isoliermaterial ausgefüllt ist, und wobei das Stutzenrohr bis in den Boden des Reformergehäuses hineinreicht.

**3.** Produktgassammelleitungssystem gemäß Anspruch 1 oder 2, **dadurch gekennzeichnet, dass** das Innenrohr des Stutzens und/oder der Sammelleitung so ausgeführt sind, dass sie gasdurchlässig sind, sodass die jeweilige Mantelleitung dem Druck des Synthesegases ausgesetzt ist.

**4.** Produktgassammelleitungssystem gemäß Anspruch 1 oder 2, **dadurch gekennzeichnet, dass** die Stutzenrohre auf dem Umfang der Produktgassammelleitung auf einer geraden, axialen Linie angeordnet sind.

**5.** Produktgassammelleitungssystem gemäß einem der vorhergehenden Ansprüche, **dadurch gekennzeichnet, dass** die Produktgassammelleitung waagrecht angeordnet ist.

**6.** Produktgassammelleitungssystem gemäß einem der vorhergehenden Ansprüche, **dadurch gekennzeichnet, dass** das innenliegende Rohr des Stutzenrohrs aus Metall gefertigt ist.

**7.** Produktgassammelleitungssystem gemäß einem der vorhergehenden Ansprüche, **dadurch gekennzeichnet, dass** das Stutzenrohr mit einer außen liegenden Isolierung gegen Wärmeverlust ausgestattet ist.

**8.** Produktgassammelleitungssystem gemäß einem der vorhergehenden Ansprüche, **dadurch gekennzeichnet, dass** der Windschild die Form einer Halbschale hat.

**9.** Produktgassammelleitungssystem gemäß einem der vorhergehenden Ansprüche, **dadurch gekennzeichnet, dass** der Windschild zwischen dem ersten und dem letzten Stutzenrohr angeordnet ist.

**10.** Produktgassammelleitungssystem gemäß Anspruch 8, **dadurch gekennzeichnet, dass** der Windschild mittig zwischen dem ersten und dem letzten Stutzenrohr angeordnet ist.

**11.** Produktgassammelleitungssystem gemäß einem der vorhergehenden Ansprüche, **dadurch gekennzeichnet, dass** der Windschild so angeordnet ist, dass er die Sammelleitung auf der den Stutzenrohen gegenüber liegenden Seite schützt.

**12.** Produktgassammelleitungssystem gemäß einem der vorhergehenden Ansprüche, **dadurch gekennzeichnet, dass** der Windschild mehrteilig ausgeführt ist.

**14.** Dampfreformer, ausgestattet mit mindestens einem Produktgassammelleitungssystem gemäß mindestens einem der vorhergehenden Ansprüche.
